# FASCICULE DE BREVET EUROPEEN

(11) **EP 0 332 524 B1**
(45) Date de publication et mention de la délivrance du brevet: **11.08.1993**
(21) Numéro de dépôt: 89400622.0
(22) Date de dépôt: 06.03.1989
(51) Int. Cl.: B23K 35/30, C22C 19/05

(54) **Alliage de brasage notamment pour la formation de joints brasés sur des pièces en acier inoxydable**
Hartlotlegierung, insbesondere zum Hartlöten von Gegenständen aud rostfreiem Stahl
Brazing alloy, particularly for brazings on stainless steel work pieces

(30) Priorité: 07.03.1988 FR 8802846
(43) Date de publication de la demande: 13.09.1989
(73) Titulaire: SAUNIER DUVAL EAU CHAUDE CHAUFFAGE S.D.E.C.C. - Société anonyme, F-92400 Courbevoie (FR)
(72) Inventeur: Anceaux, Dominique, F-54140 Jarville la Malgrange (FR)
(74) Mandataire: Lhuillier, René

(56) Documents cités:
- EP-A- 0 007 124
- EP-A- 0 051 461
- FR-A- 2 240 791
- WELDING JOURNAL, vol. 56, no. 10, octobre 1977, pages 15-21, Miami, Florida, US; R.D. ENG et al.: "Nickel-base brazing filler metals for aircraft gas turbine application"
- WELDING JOURNAL, vol. 59, no. 10, octobre 1980, pages 283-s - 288-s, Miami, Florida, US; E. LUGSCHEIDER et al.: "Structure of low-phosphorus alloyed nickel-chromium-silicon brazed stainless steel joints"

## Description

L'invention se rapporte à un alliage de brasage perfectionné à base de nickel, permettant d'obtenir des joints brasés résistant à la corrosion notamment pour le brasage de pièces en acier inoxydable utilisées dans les échangeurs de chaudières à condensation.

Dans ces appareils, les tubes qui constituent les surfaces d'échange thermique, sont susceptibles d'une corrosion importante, étant mis en contact avec l'eau de condensation des fumées. C'est pourquoi plutôt que d'utiliser du cuivre, qui est un matériau ayant un bon coefficient de conductibilité et se brasant facilement, mais qui est plus sensible à la corrosion et moins résistant à la déformation quand il s'agit de réaliser des tubes à faces aplaties, on préfère utiliser de l'acier inoxydable en faible épaisseur qui donne un bon coefficient de transfert calorifique et une résistance suffisante au gonflage sous pression d'eau. Mais l'utilisation d'un tel acier pour réaliser ce corps de chauffe impose des techniques particulières d'assemblage et de brasage des tubes. Les alliages de brasage ou brasures à base de cuivre sont proscrites puisque le cuivre s'oxyde rapidement en présence de condensats. Les brasures tendres à base d'étain et de plomb ne peuvent convenir non plus car elles ont une résistance mécanique limitée et risqueraient en cas de surchauffe, d'être détruites du fait de leur relativement faible température de fusion. Quant aux brasures à base d'argent elles sont d'un coût trop élevées pour être envisagées.

Pour le soudage d'aciers inoxydables austénitiques du type à haute teneur en chrome et en nickel, on utilise plutôt, de façon connue, des alliages de brasage à haute teneur en nickel et à moyenne teneur en chrome, qui renferment également un pourcentage de fer et de bore et des impuretés comme le silicium et le carbone. On trouve ainsi dans le commerce un alliage de brasage dit "brasure LM" qui est préconisé pour le soudage de l'acier inoxydable et qui se compose essentiellement en pourcentage en poids de 7 % de Cr, 3 % de Fe, 4,5 % de Si, 3,1 % de B et 0,06 % de C et le complément à 100 % de Ni.

Dans les conditions d'usage sévères auxquelles sont soumis les corps de chauffe en acier inoxydable précités, cette brasure présente l'inconvénient d'être sensible notamment à une corrosion intergranulaire importante dû au fait que la proportion de Cr de la brasure est assez faible et que au cours du brasage le carbone de la brasure réagit avec le chrome de l'acier constituant les pièces du corps de chauffe lui-même (par exemple les ailettes), le pourcentage de Cr de ces pièces étant notablement plus important que celui de la brasure. Il y a donc formation de carbure de chrome qui favorise la corrosion intergranulaire de ces aciers austénitiques, du fait de la migration du Cr des tubes en direction de la brasure. La présence d'une quantité non négligeable de Fe prévu pour diminuer la température de fusion et améliorer la fluidité de l'alliage présente néanmoins l'inconvénient de réagir mal en milieu acide et de favoriser la corrosion par piqûre au niveau des atomes de Fe, par formation d'oxyde de fer qui génère des trous dans l'alliage de brasage, trous qui ont tendance à se développer et à généraliser la corrosion. Quant au Si qui vient des impuretés des matériaux il n'a pas de rôle, ni d'inconvénients particuliers sauf de constituer une inhomogénéité du matériau. Enfin le B présent dans ce type d'alliage de brasage permet d améliorer la sensibilité à la trempe du matériau.

Pour éviter les inconvénients propres à la corrosion intergranulaire dans les tubes en acier inoxydable et leur brasure, on utilise avantageusement pour former ces tubes un acier chrome-nickel renfermant une certaine teneur en Ti, qui forme des petits grains inclus entre les grains du matériau et qui arrêtent la propagation de la corrosion intergranulaire. Mais les alliages de brasage connus tels que l'alliage précité ne permettent pas d'obtenir une brasure performante dans son application particulière au soudage d'ailettes de corps de chauffe en acier inoxydable.

Aussi un des buts de l'invention est-il de remédier aux inconvénients propres aux alliages de brasage connus en fournissant un alliage bien approprié au brasage des tubes du corps de chauffe en acier inoxydable, et qui résiste notamment à la corrosion et aux contraintes sévères auxquelles il est soumis.

Les caractéristiques et avantages de ce nouvel alliage seront mieux perçus à la lecture de la description suivante d'un mode de réalisation préféré.

L'alliage de brasage proposé par l'invention se compose essentiellement d'une teneur en Ni de 60 % au moins, en Cr de 25 à 30 %, en W de 4 à 5 %, en P de 3 à 5 %, en B de l'ordre de 1 %, en Fe de moins de 1 %, en Si de moins de 1 %, en C de moins de 0,03 %, d'impuretés accidentelles et le reste, en Ni en complément à 100 %.

Les raisons du choix et des teneurs des éléments ci-dessus entrant dans la composition de l'alliage de soudage sont exposés ci-après :
On a vu que plus un acier est à faible teneur en C, meilleure est sa tenue à la corrosion. Le C étant susceptible de former avec Cr du carbure de chrome, il est avantageux d'avoir un alliage de brasage à très faible teneur de C. Puisque les réservoirs de fabrication de brasures sont en céramique ou molybdène, et en tout cas plus en graphite, on peut donc limiter la teneur en C à 0,03 %. Le Cr doit avoir une teneur plus importante que celle des alliages connus. Il importe en effet que sa teneur dans l'alliage de brasage soit plus importante que dans le tube à braser, cela pour favoriser la migration de Cr vers le tube plutôt que l'inverse. L'invention a retenu par conséquent un pourcentage de 25 à 30 % qui permet une bonne résistance à la corrosion.

L'acier constituant le tube contient, comme on l'a rappelé plus haut, un certain pourcentage de Ti qui forme des petits grains interrompant la propagation de la corrosion intergranulaire dans le tube. Il serait donc avantageux de prévoir également du Ti dans l'alliage de brasage, en vue d'obtenir les mêmes avantages. Mais le Ti est très difficile à braser. La Demanderesse a effectué des essais et constaté que le W présentait les mêmes qualités de frein contre la corrosion que le Ti. La teneur en W retenue par l'invention est alors de 4 à 5 %.

Selon l'invention également le P représente 3 à 5 % de l'alliage. Il permet la fluidité de la brasure, mais ne doit pas être en trop grande quantité sinon la brasure deviendrait cassante. Quant au Fe qui constitue une impureté inévitable, et qui est un facteur de corrosion, on a réussi à le limiter à une teneur inférieure à 1 % et même souvent inférieure à 0,4 %. Le B a une teneur voisine de 1 %. Il permet de favoriser l'homogénéisation du mélange et renforce la teneur de la brasure. Cette teneur est modeste, car un excès de B présenterait l'inconvénient inverse de créer des points fragilisants dans la brasure. Enfin la teneur en Si, de l'alliage est au maximum de 1 %.

Ainsi conformément à l'invention, l'alliage de brasage réalisé avec des constituants dans les proportions ou intervalles de proportions indiqués plus haut permet d'obtenir des joints brasés de qualité entre les tubes ou ailettes d'un corps de chauffe et un ou plusieurs collecteurs. Des jeux entre les pièces à braser, ainsi que des conditions de brasage particulières, permettent de mettre à profit les qualités de l'alliage de brasage utilisé et d'obtenir des brasures solides, insensibles aux problèmes de fissuration, même dans le temps.

## Revendications

1. Alliage de brasage à base de nickel notamment pour la formation de joints brasés sur des pièces en acier inoxydable, ayant la composition suivante en pourcentages en poids :
- Chrome 25 à 30 %
- Tungstène 4 à 5 %
- Phosphore 3 à 5 %
- Bore environ 1 %
- Fer inférieur à 1 %
- Silicium inférieur à 1 %
- Carbone inférieur à 0,03 %
- impuretés accidentelles
et le reste, nickel en complément à 100 %.

## Claims

1. Brazing alloy based on nickel especially for making brazed joints on stainless steel components, which has the following composition in percentages by weight:
- chromium 25 to 30 %
- tungsten 4 to 5 %
- phosphorus 3 to 5 %
- boron approximately 1 %
- iron lower than 1 %
- silicon lower than 1 %
- carbon lower than 0.03 %
- accidental impurities
and the remainder, nickel as complement to 100 %.

## Patentansprüche

1. Hartlotlegierung auf der Basis von Nickel, insbesondere für die Ausbildung von hartgelöteten Verbindungen von Werkstücken aus rostfreiem Stahl, mit folgender Zusammensetzung in Gewichtsprozenten:
- Chrom 25 bis 30 %
- Wolfram 4 bis 5 %
- Phosphor 3 bis 5 %
- Bor ca. 1 %
- Eisen unterhalb von 1 %
- Silizium unterhalb von 1 %
- Kohlenstoff unterhalb von 0,03 %
- nicht voraussehbare Verunreinigungen und
- der Rest Nickel in einer Menge, daß 100 % erreicht wird.
